# EUROPÄISCHE PATENTANMELDUNG

(11) **EP 2 592 061 A2**
(43) Veröffentlichungstag der Anmeldung: **15.05.2013**
(21) Anmeldenummer: 12188768.1
(22) Anmeldetag: 17.10.2012
(51) Int. Cl.: C06D 5/06, C06B 45/00

(54) **Treibstoffformkörper für einen Gasgenerator**

(30) Priorität: 21.10.2011 DE 102011116592
(71) Anmelder: Bayern-Chemie Gesellschaft für flugchemische Antriebe mbH, 84544 Aschau a. Inn (DE)
(72) Erfinder: Hacker, Andreas, 83536 Gars (DE); Meier, Michael, 84559 Kraiburg (DE)
(74) Vertreter: von Puttkamer · Berngruber

(57) **Zusammenfassung**

Ein Treibstoffformkörper (1) für einen Gasgenerator weist auf gegenüberliegenden Grundflächen (2, 3) jeweils ein Sackloch (4, 5) auf.

## Beschreibung

Die Erfindung bezieht sich auf einen Treibstoffformkörper für einen Gasgenerator.

In Gasgeneratoren werden im Allgemeinen stückige Treibstoffformkörper verwendet, die meistens tablettenförmig, also flach zylindrisch ausgebildet sind und auch als Pellets bezeichnet werden. Die bekannten Treibstoffpellets weisen jedoch ein degressives Abbrandverhalten auf, d.h. die Gaserzeugungsgeschwindigkeit bzw. der Druckanstiegsgradient ist nach der Anzündung zunächst sehr hoch und nimmt dann ab. Die nach der Anzündung zunächst sehr hohe Gaserzeugungsgeschwindigkeit der bekannten Treibstoffpellets ist aus mehreren Gründen nachteilig. Insbesondere muss die Brennkammer entsprechend stabil ausgelegt werden.

Aufgabe der Erfindung ist es, einen Treibstoffformkörper für einen Gasgenerator bereitzustellen, welcher eine wesentlich geringeres degressives Abbrandverhalten aufweist.

Dies wird erfindungsgemäß dadurch erreicht, dass die Brennkammer des Gasgenerators mit Treibstoffformkörpern gefüllt ist, welche auf ihren gegenüberliegenden Grundflächen jeweils ein Sackloch aufweisen.

Damit wird ein Abbrandflächenverlauf erzielt, bei dem nach der Anzündung sich in einer ersten Phase die Abbrandfläche der Treibstoffformkörper langsam und in einer zweiten Phase, in der der Treibstoffformkörper vollständig abbrennt, schnell verringert. Dadurch wird in einem Diagramm, dessen Ordinate die Abbrandfläche und dessen Abszisse die Abbrandzeit wiedergibt, ein im Wesentlichen rechteckiger Abbrandverlauf erzielt. Dem rechteckigen Abbrandverlauf entspricht ein rechteckiger Druck/Schubverlauf. Durch den rechteckigen Schubverlauf wird die Druckspitze am Anfang des Abbrands reduziert, was eine wesentlich dünnwandigere Auslegung der Brennkammer ermöglicht. Durch den rechteckigen Schubverlauf endet der Abbrand schlagartig.

Vorzugsweise wird mit den erfindungsgemäßen Treibstoffformkörpern ein Abbrandflächenverlauf erreicht, bei dem sich in der ersten Phase die Abbrandfläche der Treibstoffformkörper um höchstens zwei Drittel, insbesondere höchstens die Hälfte verringert. Dabei nimmt die erste Phase mindestens die Hälfte, vorzugsweise mindestens zwei Drittel der gesamten, also aus erster und zweiter Phase bestehenden Abbrandzeit ein.

Vorzugsweise sind die Sacklöcher auf den gegenüberliegenden Grundflächen entlang einer gemeinsamen Achse angeordnet, insbesondere konzentrisch zur Grundfläche des Formkörpers.

Die beiden Sacklöcher des Treibstoffformkörpers sind vorzugsweise in axialer Richtung voneinander unter Bildung eines Stegs beabstandet, der vorzugsweise in der Mitte der Höhe des Formkörpers verläuft und die beiden Sacklöcher voneinander trennt. Die beiden Sacklöcher können gleich lang sein, jedoch auch eine unterschiedliche Länge aufweisen.

Die Treibstoffformkörper werden vorzugsweise durch zylindrische Pellets gebildet. Dabei weist der zylindrische Treibstoffformkörper bzw. Pellet an beiden Zylindergrundflächen jeweils ein konzentrisches Sackloch auf, während der Steg, der sich durch die Beabstandung der beiden Sacklöcher ergibt, vorzugsweise in der Mitte der Höhe des Zylinders angeordnet ist. Die Dicke des Stegs kann die Hälfte oder ein Viertel der Höhe des Zylinders betragen.

Der Durchmesser der zylindrischen Treibstoffformkörper kann 5 bis 20 mm, insbesondere 6 bis 15 mm betragen.

Die Sacklöcher sind ihrerseits vorzugsweise zylindrisch ausgebildet. Dabei kann das Verhältnis des Durchmessers der Sacklöcher zum Durchmesser des zylindrischen Treibstoffformkörpers 1:6 bis 1:2 betragen.

Das Verhältnis des Durchmessers zur Höhe des zylindrischen Treibstoffformkörpers beträgt vorzugsweise 2:1 bis 1:3, insbesondere 1:1 bis 1:2.

Die Kanten des Zylinders und/oder die Kante an der Öffnung der Sacklöcher kann abgeschrägt und/oder abgerundet sein. Die Außenflächen des Zylinders, sowie die Innenflächen der Sacklöcher können auch eine kegelige Form aufweisen.

Der Gasgenerator, dessen Brennkammer mit den erfindungsgemäßen Treibstoffformkörpern bestückt ist, kann zum Aufblasen des Schutzkissens eines Aufprallschutzsystems für Fahrzeuginsassen verwendet werden, jedoch beispielsweise auch für einen sogenannten Radlastbooster, also eine Vorrichtung, mit der zur Erhöhung der Radlast und damit zur Verkürzung des Bremsweges eines Kraft- oder Schienenfahrzeuges mit einer nach oben gerichteten Gasaustrittsdüse ein nach unten gerichteter Schub erzeugt wird.

Der erfindungsgemäße Treibstoffformkörper wird vorzugsweise durch Pressen von pulverförmigem Treibstoff hergestellt. Als Treibstoff kann dabei irgendeiner der heutzutage zur Herstellung der bekannten Treibstoffpellets verwendeten Treibstoffe verwendet werden, beispielsweise ein Treibstoff aus einem Azid, einem Oxidator und einem Schlackebildner oder ein organische Komponenten aufweisender Treibstoff, z.B. aus Guanidinnitrat-Basis.

Nachstehend ist die Erfindung anhand der beigefügten Zeichnung beispielhaft näher erläutert. Darin zeigen jeweils schematisch,
Figur 1a und 1b sowie Figur 2a und 2b eine Draufsicht bzw. einen Schnitt durch ein Standard-Pellet bzw. ein Pellet mit einer durchgehenden konzentrischen Bohrung nach dem Stand der Technik;
Figur 3a und 3b eine Draufsicht und einen Schnitt durch einen erfindungsgemäßen Treibstoffformkörper oder Pellet; und
Figur 4 ein Diagramm des Abbrandflächenverlaufs von Pellets nach dem Stand der Technik (Figur 1 und 2) sowie nach der Erfindung (Figur 3).

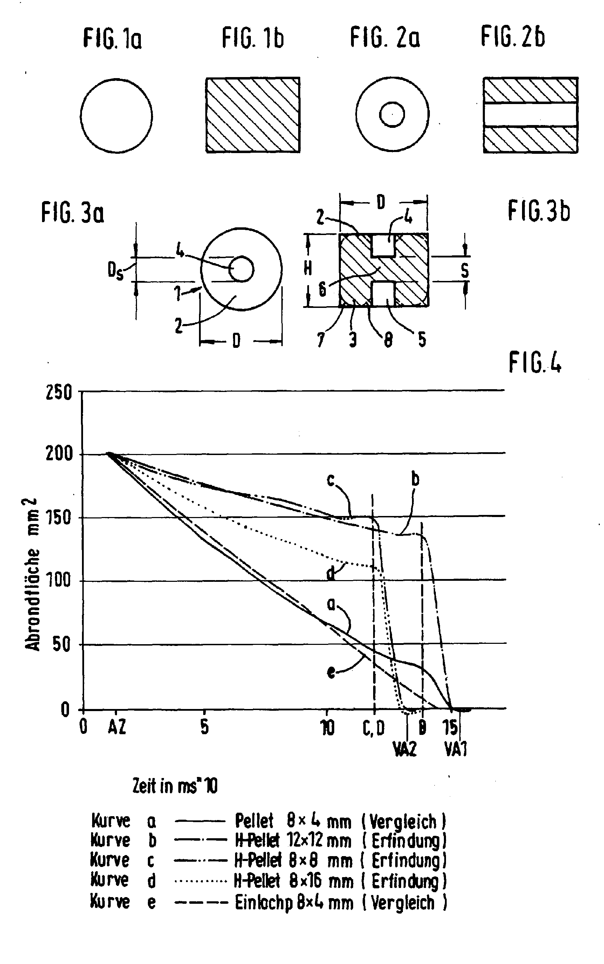

Gemäß Figur 3a und 3b weist der zylindrische Treibstoffformkörper auf den gegenüberliegenden Grundflächen 2, 3 zylindrische Sacklöcher 4, 5 auf.

Die Sacklöcher 4, 5 sind konzentrisch zu den Grundflächen 2, 3, also koaxial angeordnet, erstrecken sich also gemeinsam entlang der Zylinderachse.

Dabei sind die beiden Sacklöcher 4, 5 in Axialrichtung voneinander beabstandet, so dass ein Steg 6 zwischen den beiden Sacklöchern 4, 5 in der Mitte des Treibstoffformkörpers 1 gebildet wird, wodurch sich gemäß Figur 3b ein H-förmiger Querschnitt des Treibstoffformkörpers 1 ergibt.

Die Höhe H des zylindrischen Treibstoffformkörpers 1 kann beispielsweise 8 bis 12 mm betragen, dessen Durchmesser D z.B. 8 bis 12 mm, wobei das Verhältnis von D zu H beispielsweise 1:1 bis 1:2 betragen kann. Die Dicke S des Stegs 6 entspricht etwa der Länge eines Sacklochs 4, 5.

Vorzugsweise ist der Treibstoffformkörper 1 gemäß Figur 3 also flachzylindrisch ausgebildet, weist also die Form einer Tablette auf. Dabei können die Kanten des Zylinders und die Kanten an der Öffnung der Sacklöcher abgeschrägt oder abgerundet sein, wie durch "7" und "8" veranschaulicht.

In Figur 4 ist der Abbrandflächenverlauf der Treibstoffformkörper gemäß Figur 1a, 1b und Figur 2a, 2b, also von den bekannten, als Vollzylinder ausgebildeten Pellets bzw. mit einer durchgehenden Axialbohrung versehenen Pellets sowie von erfindungsgemäßen Pellets gemäß Figur 3a, 3b anhand eines Diagramms dargestellt.

Dabei stellt die Ordinate die Abbrandfläche in mm² der jeweils verwendeten Pellets und die Abszisse die Abbrandzeit in ms x 10 der Pellets dar.

Für die Kurve a wurden zylindrische Pellets gemäß Figur 1a, 1b mit einem Durchmesser D von 8 mm und einer Höhe H von 4 mm verwendet, für die Kurve e zylindrische Pellets mit einer durchgehenden Axialbohrung gemäß Figur 2a, 2b und mit gleichem Durchmesser und gleicher Höhe wie bei den Pellets gemäß Kurve a.

Demgegenüber wurden für die Kurven b, c und d erfindungsgemäße Pellets mit H-förmigem Querschnitt gemäß Figur 3a, 3b verwendet, und zwar mit D = 12 mm und H = 12 mm (Kurve b), D = 8 mm und H = 8 mm (Kurve c) und D = 8 mm und H = 16 mm (Kurve d).

Gemäß Figur 4 weisen die Kurven a und e, die mit Pellets gemäß Figur 1a, 1b bzw. Figur 2a, 2b erhalten worden sind, einen im Wesentlichen linear abfallenden Abbrandverlauf bis zum vollständigen Abbrand VA1 nach 130 ms auf, so dass sich unter Berücksichtigung der Ordinate und Abszisse des Diagramms ein "dreieckiger" Abbrandverlauf ergibt. Das heißt, die Gaserzeugungsgeschwindigkeit bzw. der Druckanstiegsgradient ist bei diesen Pellets nach der Anzündung AZ sehr hoch und nimmt dann ab.

Demgegenüber weisen die Kurven b, c und d, die mit erfindungsgemäßen Pellets 1 nach Figur 3a, 3b erhalten worden sind, unter Berücksichtigung von Ordinate und Abszisse einen eher "rechteckigen" Abbrandflächenverlauf auf.

Das heißt, in einer ersten Phase AZ-B von ca. 120 Millisekunden gemäß Kurve b und ca. 100 Millisekunden in der ersten Phase AZ-C bzw. AZ-D gemäß Kurve c und Kurve d ist der Druckanstieg bei den erfindungsgemäßen Pellets langsam und in der zweiten Phase von B, C bzw. D bis zum vollständigen Abbrand VA1, VA2 ca. 20 Millisekunde schnell.

In der ersten Phase AZ-B, die bei dem erfindungsgemäßen Pellet gemäß Kurve b ca. 120 ms dauert, verringert sich die Abbrandfläche von 200 mm² um ca. 60 mm² auf ca. 140 mm², und bei den erfindungsgemäßen Pellets gemäß Kurve c und d, wo die erste Phase AZ-C bzw. AZ-D ca. 100 ms dauert, von 200 mm² um ca. 90 mm² auf ca. 110 mm² bzw. um ca. 50 mm² auf ca. 150 mm².

Das heißt, allgemein wird mit den erfindungsgemäßen Pellets oder Treibstoffformkörper 1 ein Abbrandflächenverlauf erzielt, der aus einer ersten Phase AZ-B, AZ-C und AZ-D und einer zweiten Phase B-VA1, C-VA2 und D-VA2 besteht. Dabei wird die Abbrandfläche der Treibstoffformkörper in der ersten Phase AZ-B, AZ-C und AZ-D um höchstens zwei Drittel, vorzugsweise höchstens um die Hälfte verringert, wobei die erste Phasse AZ-B, AZ-C und AZ-D mindestens die Hälfte der gesamten Abbrandzeit AZ-VA1, AZ-VA2 der Treibstoffformkörper einnimmt.

## Patentansprüche

1. Treibstoffformkörper für einen Gasgenerator, **dadurch gekennzeichnet, dass** der Treibstoffformkörper (1) auf gegenüberliegenden Grundflächen (2, 3) jeweils ein Sackloch (4, 5) aufweist.

2. Treibstoffformkörper nach Anspruch 1, bei dem die auf gegenüberliegenden Grundflächen (2, 3) angeordneten Sacklöcher (4, 5) entlang einer gemeinsamen Achse angeordnet sind.

3. Treibstoffformkörper nach einem der vorstehenden Ansprüche, bei dem die Sacklöcher (4, 5) konzentrisch zur Grundfläche (2, 3) des Treibstoffformkörpers (1) angeordnet sind.

4. Treibstoffformkörper nach einem der vorstehenden Ansprüche, bei dem die Sacklöcher (4, 5) unter Bildung eines Stegs (6) in axialer Richtung voneinander beabstandet sind.

5. Treibstoffformkörper nach Anspruch 4, **dadurch gekennzeichnet, dass** der Steg (6) in der Mitte der Höhe (H) des Treibstoffformkörpers (1) verläuft.

6. Treibstoffformkörper nach Anspruch 4 und 5, **dadurch gekennzeichnet, dass** der zylindrische Treibstoffformkörper (1) an beiden Zylindergrundflächen (2, 3) jeweils ein konzentrisches Sackloch aufweist und der Steg (6) in der Mitte der Höhe (H) des Zylinders angeordnet ist.

7. Treibstoffformkörper nach einem der Ansprüche 5 bis 7,
**dadurch gekennzeichnet, dass** das Verhältnis des Durchmessers (Ds) der Sacklöcher (4, 5) zum Durchmesser (D) des zylindrischen Treibstoffformkörpers 1:2 bis 1:4 beträgt.

8. Treibstoffformkörper nach einem der Ansprüche 5 bis 8,
**dadurch gekennzeichnet, dass** das Verhältnis des Durchmessers (D) zur Höhe (H) des zylindrischen Treibstoffformkörpers 2:1 bis 1:1 beträgt.

9. Treibstoffformkörper nach einem der vorstehenden Ansprüche, **gekennzeichnet durch** einen Abbrandflächenverlauf (b, c, d) aus einer ersten Phase (AZ-B, AZ-C, AZ-D), in der sich die Abbrandfläche der Treibstoffformkörper (1) um höchstens zwei Drittel verringert und eine zweite Phase (B-VA1, C-VA2, D-VA2), in der der Treibstoffformkörper vollständig abbrennt, wobei die erste Phase (AZ-B, AZ-C, AZ-D) mindestens die Hälfte der Abbrandzeit (AZ-VA1, AZ-VA2) der Treibstoffformkörper einnimmt.
